# EUROPEAN PATENT APPLICATION

(11) **EP 4 645 454 A1**
(43) Date of publication of application: **05.11.2025**
(21) Application number: 24809202.5
(22) Date of filing: 30.10.2024
(51) Int. Cl.: H01M 4/36, C01G 53/00, C01D 15/06, H01M 4/485, H01M 4/505, H01M 4/525, H01M 4/62, H01M 4/131, H01M 10/052, H01M 10/0525, H01M 10/42

(54) **POSITIVE ELECTRODE MATERIAL AND PREPARATION METHOD THEREFOR AND USE THEREOF**

(30) Priority: 14.03.2024 CN 202410293528
(71) Applicant: Tianjin B&M Science And Technology Co., Ltd., Tianjin 300384 (CN)
(72) Inventor: ZHANG, Bin, Tianjin 300384 (CN); LI, Xuehua, Tianjin 300384 (CN); LV, Fei, Tianjin 300384 (CN); XU, Ning, Tianjin 300384 (CN)
(74) Representative: Meroni, Francesca
(86) International application number: PCT/CN2024/128600
(87) International publication number: WO 2025/189777

(57) **Abstract**

The present invention relates to the technical field of batteries, and specifically to a cathode material and a preparation method therefor and use thereof. A cathode material, including a cathode bulk and a coating layer coated on at least part of a surface of the cathode bulk, where a chemical formula of the cathode bulk is LiₐNiₓCo_{y}Mn_{z}M_{b}O₂, where 0.97≤a≤1.1, 0.5≤x<1.0, 0<y≤0.1, 0<z≤0.1, and x+y+z+b=1, and an ion M in the cathode bulk is at least one selected from Sb⁵⁺, Ti⁴⁺, Zr⁴⁺, V⁵⁺, Nb⁵⁺, W⁶⁺ and Mo⁶⁺; and the coating layer includes Li₂SO₄. The cathode material in the present invention has low residual alkali on a surface and good structural stability, and can improve cycle performance and safety performance of batteries.

## Description

### CROSS-REFERENCE TO RELATED APPLICATION

The present application claims the priority to the Chinese patent application with the filing No. 202410293528.6 filed with the China National Intellectual Property Administration on March 14, 2024, and entitled "CATHODE MATERIAL AND PREPARATION METHOD THEREFOR AND USE THEREOF", contents of which are incorporated herein by reference in entirety.

### TECHNICAL FIELD

The present invention relates to the technical field of batteries, and specifically to a cathode material and a preparation method therefor and use thereof.

### BACKGROUND ART

In order to address the endurance problem of electric vehicles, a ternary battery with high nickel content is generally loaded at present.

Although a high-nickel ternary material is more advantageous than several other cathode materials in energy density, some existing defects thereof restrict further development and application of the material, for example, a gas generation problem is caused during long charging and discharging cycles, leading to battery swelling, deformation, and shortened cycle life, and thus causing potential safety hazards.

In view of this, the present invention is specifically proposed.

### SUMMARY

One objective of the present disclosure is to provide a cathode material, so as to solve the technical problems of too high residual alkali on a surface of the cathode material and poor cycle performance of the cathode material in the prior art. The cathode material in the present invention has low residual alkali on the surface and good structural stability, and can improve cycle performance and safety performance of batteries.

Another objective of the present invention is to provide a preparation method for a cathode material, where this method, through cooperation of various steps, can reduce residual alkali on a surface of the cathode material, and can improve structural stability of the cathode material.

Another objective of the present invention is to provide a cathode plate.

Another objective of the present invention is to provide a battery.

In order to achieve the above objectives of the present invention, following technical solutions are specifically adopted.

A cathode material, including a cathode bulk and a coating layer coated on at least part of a surface of the cathode bulk, where a chemical formula of the cathode bulk is LiₐNiₓCo_{y}Mn_{z}M_{b}O₂, where 0.97≤a≤1.1, 0.5≤x<1.0, 0<y≤0.1, 0<z≤0.1, and x+y+z+b=1, and an ion M in the cathode bulk is at least one selected from Sb⁵⁺, Ti⁴⁺, Zr⁴⁺, V⁵⁺, Nb⁵⁺, W⁶⁺ and Mo⁶⁺; and the coating layer includes Li₂SO₄.

In an embodiment, an amount of residual lithium of the cathode material is 950-1,200 ppm.

A preparation method for a cathode material, including steps of:

performing a first heat treatment on a mixture of a nickel-cobalt-manganese hydroxide, a lithium source and a compound of element M, so as to render a first material, where the element M is at least one selected from Sb⁵⁺, Ti⁴⁺, Zr⁴⁺, V⁵⁺, Nb⁵⁺, W⁶⁺ and Mo⁶⁺; mixing the first material with water to wash the first material with water, where a temperature of the water is 6-20 °C, so as to render a cathode bulk; and performing a second heat treatment on a mixed material of the cathode bulk and ammonium sulfate.

In an embodiment, a mass ratio of the first material to the water is 1:(0.25-1).

In an embodiment, a first stirring treatment and a second stirring treatment are adopted during the water washing, where a duration of the first stirring treatment is 1-3 min; a duration of the second stirring treatment is 10-20 min; and a rotational speed of the second stirring treatment is 2,000-4,000 rpm.

In an embodiment, drying is performed after the water washing, where a temperature of the drying is 100-130 °C; and a duration of the drying is 150-250 min.

In an embodiment, a mass of the ammonium sulfate is 0.5%-2% of a mass of the cathode bulk.

In an embodiment, a chemical formula of the nickel-cobalt-manganese hydroxide is Niₓ₁Co_{y1}Mn_{z1}(OH)₂, where 0.50≤x₁<1, 0<y₁≤0.1, 0<z₁≤0.1, and x₁+y₁+z₁=1.

In an embodiment, the compound of M is at least one selected from oxide, hydroxide, carbonate, nitrate, sulfate, phosphate and acetate corresponding to the element M.

In an embodiment, a molar ratio of the nickel-cobalt-manganese hydroxide, the lithium source and the compound of the element M is 1:(0.97-1.1):b₁ based on total nickel-cobalt-manganese, element lithium and the element M, respectively, where 0<b₁≤0.05.

In an embodiment, the lithium source includes at least one of lithium hydroxide, lithium carbonate, lithium oxalate, lithium acetate and lithium nitrate.

In an embodiment, the first heat treatment includes 1-3 sintering treatments, where a temperature of the sintering treatment is 500-900 °C, a heat preservation duration is 1-20 h, and a heating-up rate is 1-4 °C/min.

In an embodiment, during the first heat treatment, after each sintering treatment, a pulverizing treatment is performed on the material.

In an embodiment, a temperature of the second heat treatment is 300-500 °C, a duration of the second heat treatment is 4-7 h, and a heating-up rate of the second heat treatment is 1-5 °C/min.

A cathode plate, including the cathode material, or a cathode material prepared by the preparation method for a cathode material.

A battery, including the cathode plate.

Compared with the prior art, the present invention has following beneficial effects.
(1) In the cathode material of the present invention, a doping element has a high valence state, can form a strong transition metal-oxygen bond, and increase a thermal decomposition temperature of the material, so as to mitigate an irreversible oxygen release process of a high-nickel layered material at high voltage; at the same time, a doping element with a large ionic radius entering a transition metal site can increase a lattice parameter c, so as to improve a Li⁺ migration rate; the Li₂SO₄ compound coating layer further reduces residual lithium on a surface of a ternary material; and meanwhile, Li₂SO₄ also has very good electrical conductivity, so that an ion transmission rate of the material is elevated.
(2) In the method for the cathode material of the present invention, ammonium sulfate is selected for coating, because a sulfonyl compound can react with lithium hydroxide remaining on a cathode surface to form a stable compound lithium sulfate, which not only can reduce residual lithium on the surface, but also can isolate the material and an electrolytic solution, avoid direct contact therebetween, and suppress occurrence of side reactions. The lithium sulfate generated meanwhile also has very good electrical conductivity, so as to elevate an ion transmission rate of the material, and improve cycle performance of the cathode material. Meanwhile, in the present invention, low-temperature water is selected for water washing, and can better remove the residual lithium on the surface compared with room-temperature water, thus improving a cycle retention rate of the material, and improving endurance capability of a battery.
(3) The battery prepared with the cathode material of the present invention has excellent cycle performance, rate performance and safety performance.

### BRIEF DESCRIPTION OF DRAWINGS

In order to more clearly illustrate technical solutions in embodiments of the present invention or in the prior art, drawings which need to be used in the embodiments or the prior art will be briefly introduced below, and apparently, the drawings in the following description merely show some embodiments of the present invention, and the ordinarily skilled in the art still could obtain other drawings in light of these drawings without using any inventive efforts.
FIG. 1 is a scanning electron micrograph of a cathode material in Example 1 of the present invention; and
FIG. 2 is a scanning electron micrograph of a cathode material in Comparative Example 2 of the present invention.

### DETAILED DESCRIPTION OF EMBODIMENTS

Solutions of the present invention will be described in detail below in conjunction with embodiments, while the skilled in the art would understand that the following embodiments are merely used for illustrating the present invention, but should not be considered as limiting the scope of the present invention. Examples, for which no concrete conditions are specified, are carried out according to conventional conditions or conditions recommended by manufactures. If manufacturers of reagents or instruments used are not specified, all of them are conventional products commercially available.

According to one aspect of the present invention, the present invention relates to a cathode material, including a cathode bulk and a coating layer coated on at least part of a surface of the cathode bulk, where a chemical formula of the cathode bulk is LiₐNiₓCo_{y}Mn_{z}M_{b}O₂, where 0.97≤a≤1.1, 0.5≤x<1.0, 0<y≤0.1, 0<z≤0.1, and x+y+z+b=1, and an ion M in the cathode bulk is at least one selected from Sb⁵⁺, Ti⁴⁺, Zr⁴⁺, V⁵⁺, Nb⁵⁺, W⁶⁺ and Mo⁶⁺; and the coating layer includes Li₂SO₄.

A doping element in the present invention has a high valence state, can form a strong transition metal-oxygen bond, and increase a thermal decomposition temperature of the material, so as to mitigate an irreversible oxygen release process of a high-nickel layered material at high voltage; at the same time, a doping element with a large ionic radius entering a transition metal site can increase a lattice parameter c, so as to improve a Li⁺ migration rate; the Li₂SO₄ compound coating layer further reduces residual lithium on a surface of a ternary material; and meanwhile, Li₂SO₄ also has very good electrical conductivity, so that an ion transmission rate of the material is elevated.

In an embodiment, a value of a includes, but is not limited to, 0.97, 0.98, 1, 1.03, 1.05, 1.1, etc.; a value of x includes, but is not limited to, 0.5, 0.6, 0.7, 0.8, or 0.9, etc.; a value of y includes, but is not limited to, 0.01, 0.02, 0.03, 0.05, 0.06, 0.07, 0.09 or 0.1, etc.; and a value of z includes, but is not limited to, 0.01, 0.02, 0.05, 0.06, 0.08 or 0.1, etc.

In an embodiment, an amount of the residual lithium of the cathode material is 950-1,200 ppm, for example, 950 ppm, 1,000 ppm, 1,100 ppm or 1,200 ppm.

In an embodiment, a D50 particle size of the cathode bulk is 8-12 µm, for example, 8 µm, 10 µm or 12 µm. In an embodiment, a thickness of the coating layer is 10-50 nm, for example, 10 nm, 15 nm, 20 nm, 30 nm, 40 nm or 50 nm.

According to another aspect of the present invention, the present invention further relates to a preparation method for a cathode material, including following steps:
performing a first heat treatment on a mixture of a nickel-cobalt-manganese hydroxide, a lithium source and a compound of element M, so as to render a first material, where the element M is at least one selected from Sb⁵⁺, Ti⁴⁺, Zr⁴⁺, V⁵⁺, Nb⁵⁺, W⁶⁺ and Mo⁶⁺; mixing the first material with water to wash the first material with water, where a temperature of the water is 6-20 °C, so as to render a cathode bulk; and performing a second heat treatment on a mixed material of the cathode bulk and ammonium sulfate.

In the method of the present invention, ammonium sulfate is selected for coating, because a sulfonyl compound can react with lithium hydroxide remaining on a cathode surface to form a stable compound lithium sulfate, which not only can reduce residual lithium on the surface, but also can isolate the material and an electrolytic solution, avoid direct contact therebetween, and suppress occurrence of side reactions. The lithium sulfate generated meanwhile also has very good electrical conductivity, so as to elevate an ion transmission rate of the material. Through cooperation of various steps, structural stability of the cathode material can be improved, change in structure of the material can be suppressed, and reversibility of the material can be enhanced, thus improving cycle performance of the cathode material. Meanwhile, in the present invention, low-temperature water is selected for water washing, and can better remove the residual lithium on the surface compared with room-temperature water, thus improving a cycle retention rate of the material, and improving endurance capability of a battery.

In an embodiment, a temperature of the water is 6-20 °C, for example, 6 °C, 10 °C, 12 °C, 15 °C, 18 °C or 20 °C. In the present invention, low-temperature water is selected for water washing, so that the residual lithium on the surface can be better removed, thus improving the cycle retention rate of the material, and improving endurance capability of a battery.

In an embodiment, a mass ratio of the first material to the water is 1:(0.25-1), for example, 1:0.25, 1:0.4, 1:0.5, 1:0.8, or 1:1. An appropriate mass ratio of the first material to the water is selected in the present invention, so that an effect of the water washing can be better ensured.

In an embodiment, a first stirring treatment and a second stirring treatment are adopted during the water washing, where a duration of the first stirring treatment is 1-3 min, for example, 1 min, 2 min or 3 min; a duration of the second stirring treatment is 10-20 min, for example, 10 min, 15 min, or 20 min; and a rotational speed of the second stirring treatment is 2,000-4,000 rpm, for example, 2,000 rpm, 2,500 rpm, 3,000 rpm or 4,000 rpm. In the present invention, the first stirring treatment and the second stirring treatment in suitable conditions are used to cooperate during the water washing, thus better ensuring the effect of the water washing, facilitating reducing the residual alkali on the surface of the cathode material, avoiding gas generated by contact between the residual lithium and the electrolytic solution from causing cell swelling, reducing consumption of the electrolytic solution, and ensuring stability of internal lattices of the material, thereby improving cycle and safety performances of the material.

In an embodiment, drying is performed after the water washing, where a temperature of the drying is 100-130 °C, for example, 100 °C, 110 °C, 120 °C or 130 °C; and a duration of the drying is 150-250 min, for example, 150 min, 180 min, 200 min, 220 min or 250 min. Moisture is removed through suitable drying conditions.

In an embodiment, a mass of the ammonium sulfate is 0.5%-2%, for example, 0.5%, 0.8%, 1%, 1.2%, 1.5%, 1.8% or 2%, of a mass of the cathode bulk. In the present invention, a suitable amount of ammonium sulfate is used for coating, because ammonium sulfate can react with lithium hydroxide remaining on the cathode surface to form a stable compound lithium sulfate, which not only can reduce the residual lithium on the surface, but also can isolate the material and the electrolytic solution, and avoid direct contact therebetween; moreover, ammonium sulfate meanwhile also has very good electrical conductivity, so that the ion transmission rate of the material is elevated.

In an embodiment, a chemical formula of the nickel-cobalt-manganese hydroxide is Niₓ₁Co_{y1}Mn_{z1}(OH)₂, where 0.50≤x₁<1, 0<y₁≤0.1, 0<z₁≤0.1, and x₁+y₁+z₁=1. A value of x₁ includes, but is not limited to, 0.5, 0.6, 0.7, 0.8 or 0.9, etc. A value of y₁ includes, but is not limited to, 0.01, 0.02, 0.03, 0.05, 0.06, 0.07, 0.09 or 0.1, etc. A value of z₁ includes, but is not limited to, 0.01, 0.02, 0.05, 0.06, 0.08 or 0.1, etc.

In an embodiment, the compound of M is at least one selected from oxide, hydroxide, carbonate, nitrate, sulfate, phosphate and acetate corresponding to the element M. The compound of M may be any one selected from the above, or a combination of at least two, for example, a combination of Nb₂O₅ and Sb₂O₅, or a combination of V₂O₅ and Mo₂O₆.

In an embodiment, a molar ratio of the nickel-cobalt-manganese hydroxide, the lithium source and the compound of the element M is 1:(0.97-1.1):b₁ based on total nickel-cobalt-manganese, element lithium and the element M, respectively, where 0<b₁≤0.05, for example, 1:0.97:0.01, 1:0.99:0.02, 1:1:0.03, or 1:1.1:0.05. The total nickel-cobalt-manganese refers to a sum of the elements nickel, cobalt and manganese in the nickel-cobalt-manganese hydroxide.

In an embodiment, the lithium source includes at least one of lithium hydroxide, lithium carbonate, lithium oxalate, lithium acetate and lithium nitrate. The lithium source may be any one of the above, or a combination of at least two, for example, a combination of lithium hydroxide and lithium carbonate, or a combination of lithium oxalate, lithium acetate and lithium nitrate.

In an embodiment, the first heat treatment includes 1-3 sintering treatments, where a temperature of the sintering treatment is 500-900 °C, for example, 500 °C, 600 °C, 650 °C, 700 °C, 800 °C, or 900 °C; a heat preservation duration is 1-20 h, for example, 1 h, 2 h, 5 h, 8 h, 10 h, 12 h, 15 h, 18 h or 20 h; and a heating-up rate is 1-4 °C/min, for example, 1 °C/min, 2 °C/min, 3 °C/min or 4 °C/min. In the present invention, suitable conditions of the first heat treatment are adopted, so as to ensure physicochemical properties of the first material, and facilitate later coating.

In an embodiment, during the first heat treatment, after each sintering treatment, a pulverizing treatment is performed on the material, wherein the pulverizing treatment includes mechanical crushing, so as to render a suitable particle size.

In an embodiment, a temperature of the second heat treatment is 300-500 °C, for example, 300 °C, 350 °C, 400 °C, 450 °C or 500 °C; a duration of the second heat treatment is 4-7 h, for example, 4 h, 5 h, 6 h or 7 h; and a heating-up rate of the second heat treatment is 1-5 °C/min, for example, 1 °C/min, 2 °C/min, 3 °C/min, 4 °C/min or 5 °C/min. In the present invention, through suitable conditions of the second heat treatment, the coating layer with high electrical conductivity and high ion transmission rate is formed, which can improve structural stability of the cathode material, suppress change in structure of the material, enhance reversibility of the material, and improve comprehensive performances thereof.

According to another aspect of the present invention, the present invention further relates to a cathode plate, including the cathode material, or a cathode material prepared by the preparation method for a cathode material.

In an embodiment, the cathode plate includes a cathode current collector and a cathode material layer located on at least one side surface of the cathode current collector, where the cathode coating layer contains the cathode material, a conductive agent and a binder. The conductive agent includes conductive carbon black. The binder includes polyvinylidene fluoride. A preparation method for the cathode plate includes: mixing the cathode material, a conductive agent, a binder and a solvent, where a mass ratio of the cathode material, the conductive agent to the binder is (95-97):(1-2):(2-3), so as to render a cathode slurry; and coating the cathode slurry onto the cathode current collector, drying at 100-140 °C, and rolling the cathode current collector to a thickness of 100-120 µm, so as to render the cathode plate.

According to another aspect of the present invention, the present invention further relates to a battery, including the cathode plate.

In an embodiment, the battery of the present invention includes the above cathode plate, an anode plate, a separator and an electrolytic solution.

Further illustration is given below in conjunction with specific examples and comparative examples.

### Example 1

The present example prepared a Nb⁵⁺ and Sb⁵⁺ doped modified ternary cathode material with a long cycle life, where a chemical formula thereof was Li_{1.03}Ni_{0.928}Co_{0.05}Mn_{0.02}Nb_{0.001}Sb_{0.001}O₂; and a chemical formula of a precursor selected was Ni_{0.93}Co_{0.05}Mn_{0.02}(OH)₂. A specific preparation method included following steps:
(1) mixing the above ternary precursor with lithium hydroxide, Nb₂O₅ and Sb₂O₅ in a molar ratio of n_{(Ni+Co+Mn)}:n_{(Li)}:n_{(Nb)}:n_{(Sb)}=1:1.03:0.001:0.001, mixing the same in a high-speed mixer uniformly, performing a first heat treatment on uniform mixture in a box furnace, where the first heat treatment included primary sintering and secondary sintering, where the primary sintering had a heating-up rate of 3 °C/min, raised to a temperature of 550 °C, and maintained at the temperature for 5 h, and the secondary sintering had a heating-up rate of 4 °C/min, raised to a temperature of 780 °C, and maintained at the temperature for 10 h; and after each sintering, taking out and cooling resultant, followed by mechanical crushing, so as to finally render a first material;
(2) preparing 10 °C distilled water in advance, mixing the obtained first material with the water in a mass ratio of 1:1, manually stirring for 1 min until slurry was uniform, then waterwashing the slurry in a centrifuge at a rotational speed of 3,000 rpm, after centrifugation for 15 min, taking out a filter cake, and drying the filter cake in a vacuum drying oven at a drying temperature of 120 °C for a drying duration of 200 min, so as to render a cathode bulk;
(3) feeding the obtained cathode bulk and ammonium sulfate 1% of a mass of the cathode bulk into the high-speed mixer, mixing uniformly, then performing low-temperature sintering on mixture in the box furnace, wherein a heating-up rate was 3 °C/min, a temperature was raised to 400 °C, and the temperature was maintained for 6 h; and
(4) after sintering, taking out and cooling resultant, followed by sieving, so as to finally render the ternary cathode material with a long cycle life.

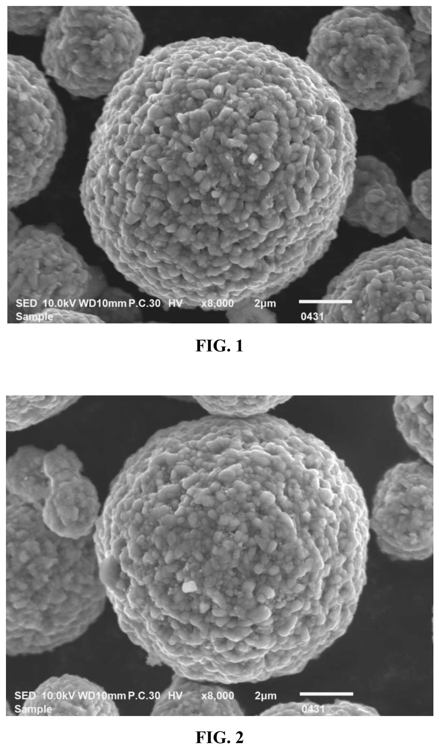

A scanning electron micrograph of the cathode material of the present invention is as shown in FIG. 1.

### Example 2

In a preparation method for a ternary cathode material of the present example, except that the temperature of the distilled water in step (2) was 6 °C, other conditions were the same as those in Example 1.

### Example 3

In a preparation method for a ternary cathode material of the present example, except that the temperature of the distilled water in step (2) was 20 °C, other conditions were the same as those in Example 1.

### Example 4

In a preparation method for a ternary cathode material of the present example, except that the mass of ammonium sulfate was 0.5% of the mass of the cathode bulk, other conditions were the same as those in Example 1.

### Example 5

In a preparation method for a ternary cathode material of the present example, except that the mass of ammonium sulfate was 2% of the mass of the cathode bulk, other conditions were the same as those in Example 1.

### Example 6

The present example prepared a W⁶⁺ and Mo⁶⁺ doped modified ternary cathode material with a long cycle life, where a chemical formula thereof was Li_{1.03}N1_{0.928}Co_{0.05}Mn_{0.02}W_{0.001}Mo_{0.001}O₂; and a chemical formula of a precursor selected was Ni_{0.93}Co_{0.05}Mn_{0.02}(OH)₂. A specific preparation method included the following steps:
(1) mixing the above ternary precursor with lithium hydroxide, W₂O₆ and Mo₂O₆ in a molar ratio of n_{(Ni+Co+Mn)}:n_{(Li)}:n_{(W)}:n_{(Mo)}=1:1.03:0.001:0.001, mixing the same in a high-speed mixer uniformly, performing a first heat treatment on uniform mixture in a box furnace, where the first heat treatment included primary sintering and secondary sintering, where the primary sintering had a heating-up rate of 3 °C/min, raised to a temperature of 650 °C, and maintained at the temperature for 3 h, and the secondary sintering had a heating-up rate of 4 °C/min, raised to a temperature of 900 °C, and maintained at the temperature for 2 h; and after each sintering, taking out and cooling resultant, followed by mechanical crushing, so as to finally render a first material;
(2) preparing 10 °C distilled water in advance, mixing the obtained first material with the water in a mass ratio of 1:1, manually stirring for 3 min until slurry was uniform, then waterwashing the slurry in a centrifuge at a rotational speed of 2,000 rpm, after centrifugation for 20 min, taking out a filter cake, and drying the filter cake in a vacuum drying oven at a drying temperature of 120 °C for a drying duration of 200 min, so as to render a cathode bulk;
(3) feeding the obtained cathode bulk and ammonium sulfate 1% of a mass of the cathode bulk into the high-speed mixer, mixing uniformly, then performing low-temperature sintering on mixture in the box furnace, wherein a heating-up rate was 3 °C/min, a temperature was raised to 500 °C, and the temperature was maintained for 4 h; and
(4) after sintering, taking out and cooling resultant, followed by sieving, so as to finally render the ternary cathode material with a long cycle life.

### Example 7

In a preparation method for a ternary cathode material of the present example, except that in step (1), the primary sinter had a heating-up rate of 1 °C/min, raised to a temperature of 500 °C, and maintained at the temperature for 7 h, the secondary sintering had a heating-up rate of 2 °C/min, raised to a temperature of 790 °C, and maintained at the temperature for 8 h; in step (2), the rotational speed was 4,000 rpm, centrifugation was performed for 10 min; and in step (3), the heating-up rate was 3 °C/min, the temperature was raised to 300 °C, and the temperature was maintained for 7 h, other conditions were the same as those in Example 6.

### Comparative Example 1

In a preparation method for a ternary cathode material of the present comparative example, except that operations in step (3) were not carried out, other conditions were the same as those in Example 1.

### Comparative Example 2

A preparation method for a ternary cathode material of the comparative example, without doping or coating, included:
(1) mixing a ternary precursor Ni_{0.93}Co_{0.05}Mn_{0.02}(OH)₂ with lithium hydroxide in a ratio of n_{(Ni+Co+Mn)}:n_{(Li)}=1:1.03, mixing the same in a high-speed mixer uniformly, performing a first heat treatment on uniform mixture in a box furnace, where the first heat treatment included primary sintering and secondary sintering, where the primary sintering had a heating-up rate of 3 °C/min, raised to a temperature of 550 °C, and maintained at the temperature for 5 h, and the secondary sintering had a heating-up rate of 4 °C/min, raised to a temperature of 780 °C, and maintained at the temperature for 10 h; and
(2) after sintering, taking out and cooling resultant, followed by mechanical crushing, so as to finally render a crushed material Li_{1.03}Ni_{0.93}Co_{0.05}Mn_{0.02}O₂.

A scanning electron micrograph of the cathode material of the present comparative example is as shown in FIG. 2.

### Experimental Example

### I. Test of residual alkali on surfaces of materials

Test situations of the residual alkali on surfaces of the cathode materials of various examples and comparative examples of the present invention are as shown in TABLE 1, where acid-base titration was used.

**TABLE 1 Test Results of Residual Alkali on Surfaces**

| Group | Lithium Hydroxide (ppm) | Lithium Carbonate (ppm) | Amount of Residual Lithium (ppm) |
|---|---|---|---|
| Example 1 | 2507 | 1305 | 972 |
| Example 2 | 2900 | 1291 | 1083 |
| Example 3 | 2589 | 1374 | 1009 |
| Example 4 | 2638 | 1413 | 1030 |
| Example 5 | 2519 | 1467 | 1006 |
| Example 6 | 2499 | 1399 | 987 |
| Example 7 | 2679 | 1417 | 1043 |
| Comparative Example 1 | 3688 | 1228 | 1300 |
| Comparative Example 2 | 4088 | 1408 | 1450 |

As can be seen from TABLE 1, the method of the present invention can effectively reduce the residual alkali on the surface of the cathode material, so that the structure of the cathode material is more stable. The cathode material obtained in Comparative Example 2 without doping and coating has more residual alkali on the surface.

### II. Test of electrochemical performances of batteries

The cathode materials obtained in various examples and comparative examples were made into batteries, respectively, specifically including following steps:
(1) mixing the cathode material, a conductive material carbon black and a binder polyvinylidene fluoride in a weight ratio of 97.0:1.0:2.0 in a N-methyl-2-pyrrolidone solvent so as to prepare a cathode slurry; coating the cathode slurry onto a surface of an aluminum foil, drying at 130 °C, and then rolling the aluminum foil into an electrode plate with a thickness of 115 µm, so as to render a cathode plate;
(2) mixing an anode active material carbon black and a binder polyvinylidene fluoride in a weight ratio of 97:3, then adding mixture into a N-methylpyrrolidone solvent so as to prepare an anode active material slurry; coating the anode active material slurry onto a copper foil with a thickness of 16 µm, drying at 120 °C, and then rolling the copper foil into an electrode plate with a thickness of 121 µm, so as to render an anode; and
(3) interposing a porous polyethylene separator between the cathode and the anode prepared above so as to prepare an electrode assembly, and placing the electrode assembly inside a battery case; then injecting an electrolytic solution into the case so as to render a lithium secondary battery. In this case, for the electrolytic solution, LiPF₆ was dissolved in an organic solvent of ethylene carbonate (EC), dimethyl carbonate (DMC) and ethyl methyl carbonate (EMC) mixed in a mass ratio of 3:4:3, so as to prepare 1 mol/L electrolytic solution, thus rendering the battery.

Various lithium secondary batteries prepared above were charged to 4.30 V at a constant current of 0.1 C at 20 °C, and discharged to 2.80 V at a constant current of 0.1 C, so as to measure an initial discharge capacity and Coulombic efficiency.

After that, various secondary batteries after initial charge/discharge were charged to 4.25 V at a constant current of 0.50 C at 45 °C, discharged to 2.80 V at a constant current of 0.50 C, which was set as one cycle, 50 cycles of charge/discharge were performed so as to measure a capacity retention rate, and results are shown in TABLE 2 below.

**TABLE 2 Test Results of Electrochemical Performances of Batteries**

| | 0.1C Discharge Specific Capacity (mAh/g) | Coulombic Efficiency (%) | 50-cycle Capacity Retention Rate (%) |
|---|---|---|---|
| Example 1 | 226.5 | 93.28 | 95.46 |
| Example 2 | 225.9 | 93.18 | 94.25 |
| Example 3 | 226.1 | 93.25 | 94.31 |
| Example 4 | 225.8 | 93.01 | 94.56 |
| Example 5 | 225.8 | 93.22 | 94.72 |
| Example 6 | 225.5 | 93.21 | 95.32 |
| Example 7 | 225.3 | 92.51 | 94.32 |
| Comparative Example 1 | 225.1 | 91.96 | 91.19 |
| Comparative Example 2 | 221.5 | 90.58 | 89.34 |

As can be seen from TABLE 2, the batteries prepared with the cathode materials of Examples 1-3 of the present invention have higher discharge capacities, Coulombic efficiency and capacity retention rates. The coating was not performed in Comparative Example 1, and doping and coating were not performed in Comparative Example 2, so that the cathode materials obtained therein have relatively poor discharge capacities, Coulombic efficiency and capacity retention rates.

Finally, it should be noted that the various examples above are merely used for illustrating the technical solutions of the present invention, rather than limiting the present invention; while the present invention is described in detail with reference to the preceding examples, the ordinarily skilled in the art should understand that they still could modify the technical solutions described in the various preceding examples, or make equivalent substitutions to some or all of the technical features therein; and these modifications or substitutions do not make corresponding technical solutions essentially depart from the scope of the technical solutions of the various examples of the present invention.

## Claims

1. A cathode material, comprising a cathode bulk and a coating layer coated on at least part of a surface of the cathode bulk, wherein
a chemical formula of the cathode bulk is LiₐNiₓCo_{y}Mn_{z}M_{b}O₂, wherein 0.97≤a≤1.1, 0.5≤x<1.0, 0<y≤0.1, 0<z≤0.1, and x+y+z+b=1, and an ion M in the cathode bulk is at least one selected from Sb⁵⁺, Ti⁴⁺, Zr⁴⁺, V⁵⁺, Nb⁵⁺, W⁶⁺ and Mo⁶⁺; and
the coating layer comprises Li₂SO₄.

2. The cathode material according to claim 1, wherein an amount of residual lithium of the cathode material is 950-1,200 ppm.

3. A preparation method for a cathode material, comprising steps of:
performing a first heat treatment on a mixture of a nickel-cobalt-manganese hydroxide, a lithium source and a compound of element M, so as to render a first material, wherein the element M is at least one selected from Sb⁵⁺, Ti⁴⁺, Zr⁴⁺, V⁵⁺, Nb⁵⁺, W⁶⁺ and Mo⁶⁺;
mixing the first material with water to wash the first material with water, wherein a temperature of the water is 6-20 °C, so as to render a cathode bulk; and
performing a second heat treatment on a mixed material of the cathode bulk and ammonium sulfate.

4. The preparation method for a cathode material according to claim 3, comprising at least one of following characteristics (1) to (3):
(1) a mass ratio of the first material to the water is 1:(0.25-1);
(2) a first stirring treatment and a second stirring treatment are adopted during the water washing, wherein a duration of the first stirring treatment is 1-3 min; a duration of the second stirring treatment is 10-20 min; and a rotational speed of the second stirring treatment is 2,000-4,000 rpm; and
(3) drying is performed after the water washing, wherein a temperature of the drying is 100-130 °C, and a duration of the drying is 150-250 min.

5. The preparation method for a cathode material according to claim 3, wherein a mass of the ammonium sulfate is 0.5%-2% of a mass of the cathode bulk.

6. The preparation method for a cathode material according to claim 3, comprising at least one of following characteristics (1) to (4):
(1) a chemical formula of the nickel-cobalt-manganese hydroxide is Niₓ₁Co_{y1}Mn_{z1}(OH)₂, wherein 0.50≤x₁<1, 0<y₁≤0.1, 0<z₁≤0.1, and x₁+y₁+z₁=1;
(2) the compound of M is at least one selected from oxide, hydroxide, carbonate, nitrate, sulfate, phosphate and acetate corresponding to the element M;
(3) a molar ratio of the nickel-cobalt-manganese hydroxide, the lithium source and the compound of the element M is 1:(0.97-1.1):b₁ based on total nickel-cobalt-manganese, element lithium and the element M, respectively, wherein 0<b₁≤0.05; and
(4) the lithium source comprises a lithium salt of at least one of lithium hydroxide, lithium carbonate, lithium oxalate, lithium acetate and lithium nitrate.

7. The preparation method for a cathode material according to claim 3, comprising at least one of following characteristics (1) to (2):
(1) the first heat treatment comprises 1-3 sintering treatments, wherein a temperature of the sintering treatment is 500-900 °C, a heat preservation duration is 1-20 h, and a heating-up rate is 1-4 °C/min; and
(2) during the first heat treatment, after each sintering treatment, a pulverizing treatment is performed on the material.

8. The preparation method for a cathode material according to claim 3, wherein a temperature of the second heat treatment is 300-500 °C, a duration of the second heat treatment is 4-7 h, and a heating-up rate of the second heat treatment is 1-5 °C/min.

9. A cathode plate, comprising the cathode material according to claim 1 or 2, or the cathode material prepared by the preparation method for a cathode material according to any one of claims 3-8.

10. A battery, comprising the cathode plate according to claim 9.
